# EUROPEAN PATENT APPLICATION

(11) **EP 4 496 113 A1**
(43) Date of publication of application: **22.01.2025**
(21) Application number: 23892039.1
(22) Date of filing: 16.11.2023
(51) Int. Cl.: H01M 50/59, H01M 50/586, H01M 10/0587, H01M 10/04, H01M 50/538, H01M 50/188, H01M 50/567, H01M 50/559, H01M 50/107

(54) **JELLY ROLL, SECONDARY BATTERY, BATTERY PACK, AND AUTOMOBILE**

(30) Priority: 17.11.2022 KR 20220154665
(71) Applicant: LG Energy Solution, Ltd., Seoul 07335 (KR)
(72) Inventor: KIM, Mooyoung, Daejeon 34122 (KR); KIM, Kwang Jung, Daejeon 34122 (KR); KIM, Jun Tak, Daejeon 34122 (KR)
(74) Representative: Goddar, Heinz J.
(86) International application number: PCT/KR2023/018458
(87) International publication number: WO 2024/106976

(57) **Abstract**

A jelly roll includes an electrode assembly having a structure in which a positive electrode, a separator, and a negative electrode are stacked and wound; and a tubing provided to surround at least a portion of a side surface of the electrode assembly and at least a portion of an end portion perpendicular to a winding axis of the electrode assembly. The tubing is provided to include a hole formed in a central portion of one end portion perpendicular to the winding axis of the electrode assembly, a secondary battery including the jelly roll, a battery pack, and a vehicle.

## Description

### [Technical Field]

The present invention relates to a jelly roll, a secondary battery, a battery pack, and a vehicle.

This application claims priority to and the benefit of Korean Patent Application No. 10-2022-0154665 filed in the Korean Intellectual Property Office on November 17, 2022, the entire contents of which are incorporated herein by reference.

### [Background Art]

Due to characteristics of being easily applicable to various products and electrical characteristics such as high energy density, a secondary battery is universally applied to not only a portable device but also an electric vehicle (EV), a hybrid electric vehicle (HEV), or the like that is driven by an electrical driving source.

The secondary battery is attracting attention as a new energy source to improve eco-friendliness and energy efficiency because of the primary advantage that the use of fossil fuels can be dramatically reduced as well as the secondary advantage that no by-products are generated from the use of energy.

Secondary batteries that are widely used at present include lithium ion batteries, lithium polymer batteries, nickel-cadmium batteries, nickel-hydrogen batteries, nickel-zinc batteries, and the like. The operating voltage of a unit secondary battery cell is about 2.5 V to 4.5 V. Therefore, when a higher output voltage is required, a battery pack may be configured by connecting a plurality of secondary batteries in series. In addition, a battery pack may be configured by connecting a plurality of secondary batteries in parallel depending on the charge/discharge capacity required for the battery pack. Accordingly, the number of secondary batteries included in the battery pack and the form of electrical connection may be variously set depending on the required output voltage and/or charge/discharge capacity.

Note that, as types of secondary battery, cylindrical, prismatic, and pouch-type secondary batteries are known. The above-described secondary battery may be a cylindrical secondary battery. In the secondary battery, a separator that is an insulator is interposed between a positive electrode and a negative electrode, which is then wound to form a electrode assembly, and the electrode assembly is inserted into a battery can together with an electrolyte, whereby a battery is configured. A strip-shaped electrode tab may be connected to an uncoated portion of each of the positive electrode and the negative electrode, and the electrode tab electrically connects the electrode assembly and an electrode terminal exposed to the outside. For reference, a positive electrode terminal is a cap plate of a sealing body that seals an open portion of a battery can, and a negative electrode terminal is the battery can.

According to the secondary battery having such a structure of the related art, the current is concentrated on the strip-shaped electrode tab connected to the positive electrode uncoated portion and/or the negative electrode uncoated portion, so the resistance is large, a lot of heat is generated, and the current collection efficiency is poor.

For small cylindrical secondary batteries with a form factor of 18650 or 21700, resistance and heat generation are not major issues. However, when a form factor of a cylindrical secondary battery is increased in order to apply the cylindrical secondary battery to an electric vehicle, a problem may occur in which the cylindrical secondary battery ignites as a lot of heat is generated around the electrode tab during a rapid charging process. Accordingly, there is a need for development of a cylindrical secondary battery with an increased form factor.

### [Detailed Description of the Invention]

### [Technical Problem]

The present invention has been made in an effort to provide a jelly roll and a secondary battery capable of realizing a high energy density by including a tubing provided to surround a side surface of an electrode assembly and one end portion perpendicular to a winding axis of the electrode assembly.

Another object of the present invention is to provide a battery pack including a secondary battery having an improved structure as described above, and a vehicle including the battery pack.

However, the technical problem to be solved by the present invention is not limited to the above-described problem, and other problems not described will be apparently understood by one skilled in the art from the following description.

### [Technical Solution]

An exemplary embodiment of the present invention provides a jelly roll including: an electrode assembly having a positive electrode, a separator, and a negative electrode which are stacked and wound; and a tubing provided to surround at least a part of a side surface of the electrode assembly and at least a part of an end portion perpendicular to a winding axis of the electrode assembly, wherein the tubing has a hole formed in a central portion of one end portion perpendicular to the winding axis of the electrode assembly.

Another exemplary embodiment of the present invention provides a secondary battery including: the jelly roll according to the exemplary embodiment of the present invention; and a battery can configured to accommodate the jelly roll, wherein the battery can includes an electrode terminal riveted through a through-hole formed in a bottom of the battery can, and a gasket provided between the electrode terminal and an edge of the through-hole.

Still another exemplary embodiment of the present invention provides a battery pack including the secondary battery according to the exemplary embodiment described above.

Yet another exemplary embodiment of the present invention provides a vehicle including the battery pack according to the exemplary embodiment described above.

### [Advantageous Effects]

For development of secondary batteries that require high capacity and high output, a positive electrode uncoated portion and a negative electrode uncoated portion are located at one end portion perpendicular to the winding axis of the electrode assembly and the other end portion that is an opposite surface to the one end portion, respectively, and current collector plates are welded to the uncoated portions, whereby current collection efficiency can be improved. This makes it possible to lower internal resistance of the secondary battery and to increase energy density.

In the related art, after laser welding the positive electrode current collector plate of the electrode assembly to the positive electrode uncoated portion, an insulating tape was attached to the exposed uncoated portion and current collector plate in order to insulate a portion where the uncoated portion and the current collector plate come into contact with the battery can. Attaching the insulating tape is disadvantageous in terms of appearance quality and process, and causes a problem of the insulating tape coming off due to wrinkling or lifting when inserting the jelly roll into the battery can.

According to exemplary embodiments of the present invention, the tubing provided to surround the side surface of the electrode assembly and at least a portion of one end portion perpendicular to the winding axis of the electrode assembly is included, so that the problem of the insulating tape being wrinkled or lifted does not occur, making it possible to improve an insulation quality, to shorten the tact time required to produce one product, and to improve process capability. In addition, insertion into a battery can is facilitated, and reworkability is easy, which is also advantageous for cost savings.

This allows for a stable increase in the current applied to the battery, implementation of high energy density, and provision of a high-capacity, high-power secondary battery.

However, advantageous effects to be obtained by the present invention are not limited to the effects described above, and other effects not described herein can be clearly understood by one skilled in the art from the following description of the present invention.

### [Brief Description of Drawings]

The accompanying drawings illustrate preferred exemplary embodiments of the present invention, and together with the following description of the present invention, serve to provide further understanding of the technical spirit of the present invention, and therefore, the present invention should not be construed as being limited to the drawings.
FIGS. 1(a) and 1(b) are views schematically showing a jelly roll including a tubing according to an exemplary embodiment of the present invention, respectively.
FIG. 2 is a view schematically showing a structure of a secondary battery including the jelly roll according to the exemplary embodiment of the present invention.
FIG. 3 is photographs showing (a) a process, (b) one end portion perpendicular to a winding axis of an electrode assembly, (c) the insulating tape in a wrinkled and lifted form, and (d) the insulating tape coming off upon insertion into the battery can, in a jelly roll with an insulating tape attached according to Comparative Example of the present invention.
FIG. 4 is photographs showing (a) a process, (b) one end portion perpendicular to a winding axis of an electrode assembly, and (c) a side surface of the electrode assembly, in a tubing of a small cylindrical secondary battery with a form factor of 21700 according to Comparative Example of the present invention.
FIG. 5 is a view showing a schematic configuration of a battery pack including secondary batteries according to an exemplary embodiment of the present invention.
FIG. 6 is a view showing a schematic configuration of a vehicle including a battery pack according to an exemplary embodiment of the present invention.

### <Explanation of Reference Numerals and Symbols>

1: electrode assembly
2: side surface of electrode assembly
3: one end portion perpendicular to winding axis of electrode assembly
4: other end portion perpendicular to winding axis of electrode assembly
6: positive electrode uncoated portion
7: positive electrode current collector plate
10: tubing
11: hole in tubing
12A: area of tubing provided at end portion perpendicular to winding axis of electrode assembly
12W: width of tubing provided at end portion perpendicular to winding axis of electrode assembly
20: jelly roll
30: secondary battery
31: battery can
40: battery pack
50: pack housing
60: vehicle
100: electrode terminal
110: body portion
120: external flange portion
130: internal flange portion
140: flat portion
200: bottom of battery can
300: through-hole
400: gasket
C: winding axis

### [Best Mode]

The terms or words used throughout the specification and the claims should not be construed as being limited to their ordinary or dictionary meanings, but construed as having meanings and concepts consistent with the technical idea of the present invention, based on the principle that an inventor may properly define the concepts of the words or terms to best explain the invention.

The terms used in the present specification are merely used to describe various exemplary embodiments of the present invention but are not intended to limit the present invention. The singular forms "a", "an" and "the" are intended to include plural forms as well, unless the context clearly indicates otherwise.

In the present specification, it should be understood that terms such as "include", "comprise", "provide" or "have" are used to describe the presence of a specific component, and do not exclude the presence or possibility of addition of other components.

In addition, terms such as "part" and "device" described in the specification should be understood as a unit that performs at least one function or operation.

In the present specification, the expression "existing on" a specific component is intended to express "existing on one side" of a specific component, and is not intended to limit an upper-lower relationship, and is not also limited to being in physical contact with the component but means that another member may be additionally provided between the components.

In the present specification, the "tubing" refers to a structure that surrounds a jelly roll without a seam, unlike an insulating tape.

The configurations described in the following description with reference to the accompanying drawings do not represent all technical concepts or ideas of the present invention but should be considered to be exemplary embodiments of the present disclosure. Therefore, it should be understood that various modifications and equivalents of the exemplary embodiments may be devised within the scope of the present invention at the time of the filing of the application.

In order to help understanding of the invention, in the accompanying drawings, some components may not be drawn to scale, but their dimensions may be exaggerated. In addition, the same reference numbers may be assigned to the same components in different exemplary embodiments.

Hereinafter, an exemplary embodiment of the present invention will be described with reference to the drawings.

An exemplary embodiment of the present invention provides a jelly roll including: an electrode assembly having a structure in which a positive electrode, a separator, and a negative electrode are stacked and wound; and a tubing provided to surround at least a portion of a side surface of the electrode assembly and at least a portion of an end portion perpendicular to a winding axis of the electrode assembly, wherein the tubing is provided to include a hole formed at a central portion of one end portion perpendicular to the winding axis of the electrode assembly.

The tubing is different from the insulating tape and refers to a structure that surrounds the jelly roll without a seam.

The tubing structure provided to surround the side surface of the electrode assembly and at least a portion of one end portion perpendicular to the winding axis of the electrode assembly is included, so that the problem of wrinkling or lifting does not occur compared to the insulating tape, making it possible to improve an insulation quality, to shorten the tact time required to produce one product, and to improve process capability. In addition, battery can insertion is facilitated, and reworkability is easy, which is also advantageous for cost savings.

The tubing has such a shape that a hole is formed in the central portion of one end portion perpendicular to the winding axis of the electrode assembly and thus the one end portion is open, making it easy to apply the tubing to the electrode assembly. Specifically, the tubing fabric used for the tubing is provided in a reel type, so that it can be cut and fed, which is advantageous in implementing a process of producing the tubing including the hole.

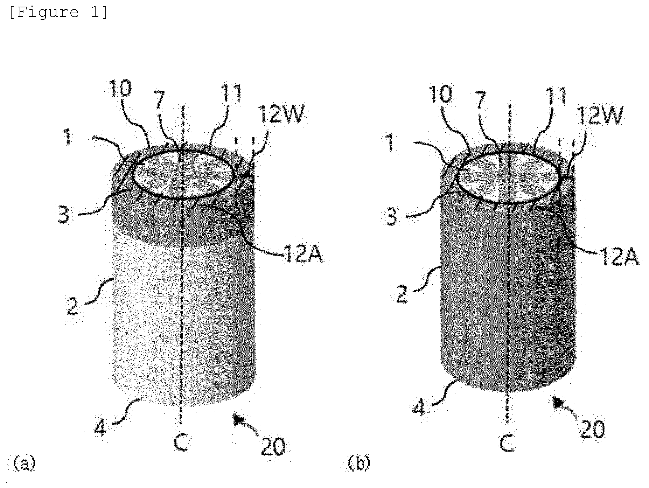

FIGS. 1(a) and 1(b) are views schematically showing a jelly roll including a tubing according to an exemplary embodiment of the present invention, respectively.

Referring to FIGS. 1(a) and 1(b), a tubing 10 may be provided to surround at least a portion of a side surface 2 of the electrode assembly and at least a portion of one end portion 3 perpendicular to a winding axis of the electrode assembly.

For a secondary battery that require high capacity and high output, a positive electrode uncoated portion and a negative electrode uncoated portion may be located at one end portion perpendicular to the winding axis of the electrode assembly and the other end portion opposite to the one end portion, respectively, and current collector plates may be welded to the uncoated portions to improve current collection efficiency. This makes it possible to lower internal resistance of the secondary battery and to increase energy density. After laser welding a positive electrode current collector plate 7 of the electrode assembly 1 to a positive electrode uncoated portion 6, the tubing 10 may be included in order to insulate a portion where the positive electrode uncoated portion 6 and the positive electrode current collector plate 7 come into contact with a battery can 31.

The tubing 10 provided to surround the side surface 2 of the electrode assembly and one end portion 3 perpendicular to the winding axis of the electrode assembly where the positive electrode uncoated portion 6 and the positive electrode current collector plate 7 are exposed and thus may come into contact with the battery can 31 is included, so that insulation quality can be improved and insertion of the electrode assembly into the battery can can be facilitated.

Referring to FIG. 1(a), according to an exemplary embodiment of the present invention, the tubing 10 provided to surround at least a portion of the side surface 2 of the electrode assembly and at least a portion of one end portion 3 perpendicular to the winding axis of the electrode assembly is configured to include a hole 11 formed in a central portion of one end portion 3 perpendicular to the winding axis of the electrode assembly. The tubing 10 may be provided for insulation of a portion where the positive electrode uncoated portion 6 and the positive electrode current collector plate 7 are exposed on the side surface 2 of the electrode assembly and one end portion 3 perpendicular to the winding axis of the electrode assembly and thus come into contact with the battery can 31. In addition, the problem of wrinkling or lifting does not occur compared to the insulating tape, making it possible to improve an insulation quality, to shorten the tact time required to produce one product, and to improve process capability by replacing a taping process. Accordingly, insertion into a battery can is facilitated, and reworkability is easy, which is also advantageous for cost savings.

Referring to FIG. 1(b), according to another exemplary embodiment of the present invention, a tubing 10 may be provided to surround at least a portion of one end portion 3 perpendicular to the winding axis of the electrode assembly, to have a hole 11 formed in a central portion of the one end portion, and to surround all, not a part, of the side surface 2 of the electrode assembly. Accordingly, the tubing 10 may be provided for insulation of a portion where the positive electrode uncoated portion 6 and the positive electrode current collector plate 7 are exposed on the side surface 2 of the electrode assembly and one end portion 3 perpendicular to the winding axis of the electrode assembly and thus come into contact with the battery can 31. This is advantageous in terms of process because the tubing can replace the role of a fixing tape that secures the jelly roll 20 before insertion into the battery can 31.

In an exemplary embodiment of the present invention, the tubing is configured to include a hole formed in a central portion of one end portion perpendicular to the winding axis of the electrode assembly.

The hole formed in the central portion of one end portion 3 perpendicular to the winding axis of the electrode assembly refers to a hole formed from a center point of a circle that is a cross-section perpendicular to the winding axis of the electrode assembly.

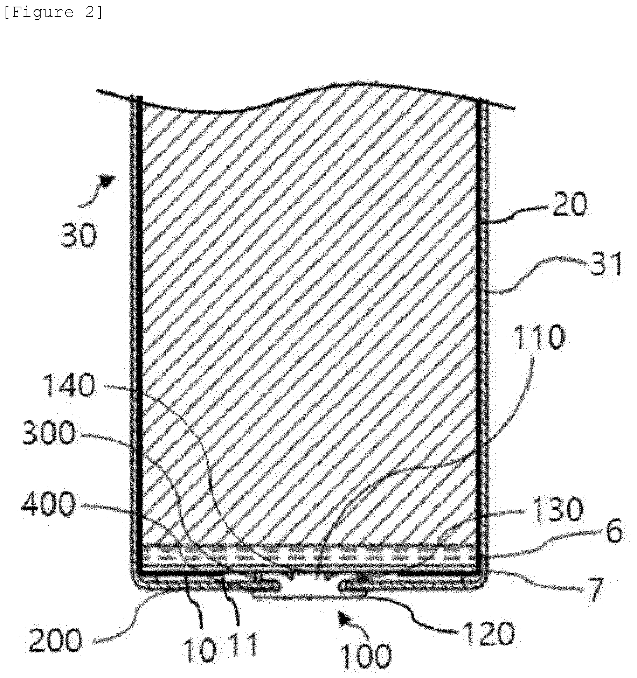

FIG. 2 is a view schematically showing a structure of a secondary battery including the jelly roll according to the exemplary embodiment of the present invention.

According to FIG. 2, as will be described below, a secondary battery according to an exemplary embodiment of the present invention is a secondary battery 30 including the jelly roll 20 according to an exemplary embodiment of the present invention; and a battery can 31 configured to accommodate the jelly roll 20, wherein the battery can 31 includes an electrode terminal 100 riveted through a through-hole 300 formed in a bottom 200 of the battery can, and a gasket 400 provided between the electrode terminal 100 and an outer diameter portion of the through-hole 300.

In the electrode assembly, the positive electrode current collector plate 7 welded to the positive electrode uncoated portion 6 can be electrically connected to the electrode terminal 100 riveted through the through-hole 300 formed in the bottom 200 of the battery can. To this end, the positive electrode current collector plate 7 and the riveted electrode terminal 100 should be welded, and can be electrically connected through the hole 11 formed in the central portion of one end portion 3 perpendicular to the winding axis of the electrode assembly provided in the tubing 10. In addition, the exposed positive electrode uncoated portion 6 and the positive electrode current collector plate 7 of the electrode assembly 1 that come into contact with the remaining battery can 31 can be insulated by the tubing 10. This allows for a stable increase in the current applied to the battery, implementation of high energy density, and provision of a high-capacity, high-power secondary battery.

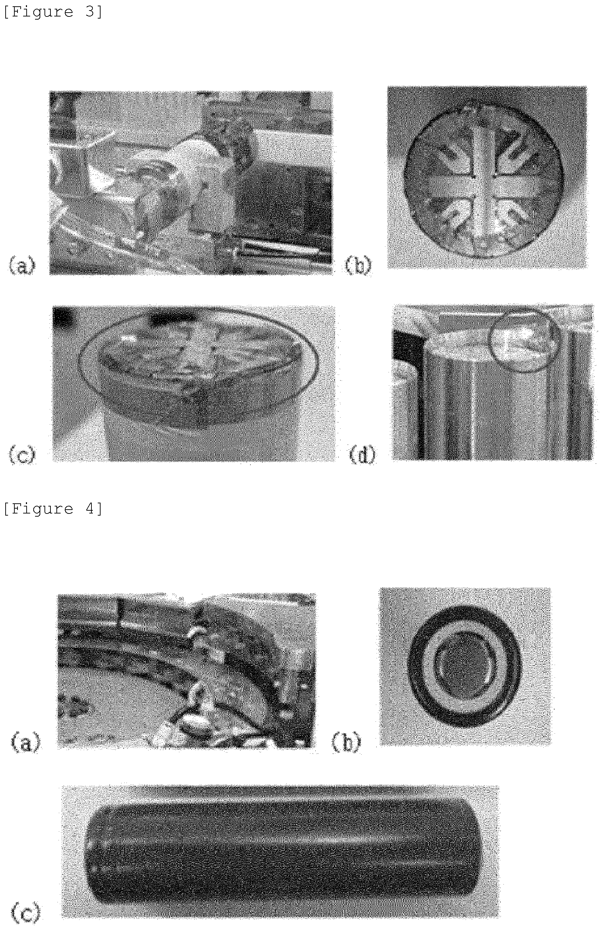

FIG. 3 is photographs showing (a) a process, (b) one end portion perpendicular to a winding axis of an electrode assembly, (c) the insulating tape in a wrinkled and lifted form, and (d) the insulating tape coming off upon insertion into the battery can, in a jelly roll with an insulating tape attached according to Comparative Example of the present invention, and FIG. 4 is photographs showing (a) a process, (b) one end portion perpendicular to a winding axis of an electrode assembly, and (c) a side surface of the electrode assembly, in a tubing of a small cylindrical secondary battery with a form factor of 21700 according to Comparative Example of the present invention.

Referring to of FIGS. 3(a) to 3(d), after laser welding the positive electrode current collector plate of the electrode assembly to the positive electrode uncoated portion, an insulating tape may be attached to the exposed positive electrode uncoated portion and the positive electrode current collector plate in order to insulate a portion where the positive electrode uncoated portion and the positive electrode current collector plate come into contact with the battery can. Attaching the insulating tape is disadvantageous in terms of appearance quality and process because it causes a problem of the insulating tape coming off due to wrinkling or lifting of the insulating tape when inserting the jelly roll into the battery can.

In addition, referring to FIGS. 4(a) to 4(c), the tubing of the small cylindrical secondary battery with a form factor of 21700 is provided outside of the battery can, and therefore, cannot have the effect of improving insulation quality and facilitating insertion into a battery can, which is achieved by the tubing provided in the electrode assembly according to the exemplary embodiment of the present invention.

An exemplary embodiment of the present invention provides the jelly roll in which at least one of the positive electrode and the negative electrode includes a current collector and an electrode active material layer provided on the current collector, the current collector includes an uncoated portion not provided with the electrode active material layer, at least a portion of the uncoated portion is exposed to a side surface of the electrode assembly, and the tubing is provided to surround the uncoated portion on the side surface of the electrode assembly.

For high capacity and high output of the secondary battery, the positive electrode uncoated portion and the negative electrode uncoated portion are located at one end portion perpendicular to the winding axis of the electrode assembly and the other end portion that is an opposite surface to the one end portion, respectively, whereby the internal resistance of the secondary battery can be lowered and the energy density can be increased.

In this case, the tubing provided to surround the uncoated portion on the side surface of the electrode assembly is included, so that the problem of wrinkling or lifting does not occur compared to the insulating tape, making it possible to improve an insulation quality, to shorten the tact time required to produce one product, and to improve process capability. In addition, insertion into a battery can is facilitated, and reworkability is easy, which may also be advantageous for cost savings.

An exemplary embodiment of the present invention provides the jelly roll further including a current collector plate provided at an end portion perpendicular to the winding axis of the electrode assembly, wherein the current collector plate is located between the tubing and the electrode assembly or is located at the other end portion perpendicular to the winding axis of the electrode assembly.

Of the current collector plates provided at the end portions perpendicular to the winding axis of the electrode assembly, the current collector plate located between the tubing and the electrode assembly may be a positive electrode current collector plate, and the current collector plate located at the other end portion perpendicular to the winding axis of the electrode assembly may be a negative electrode current collector plate.

For high capacity and high output of the secondary battery, a positive electrode uncoated portion and a negative electrode uncoated portion are located at one end portion perpendicular to the winding axis of the electrode assembly and the other end portion that is an opposite surface to the one end portion, respectively, and the current collector plates are welded to the uncoated portions, whereby current collection efficiency can be improved. This makes it possible to lower internal resistance of the secondary battery and to increase energy density.

The tubing provided to surround the current collector plate on the side surface of the electrode assembly is included, making it possible to improve an insulation quality and process capability and to facilitate insertion of the electrode assembly into the battery can.

An exemplary embodiment of the present invention provides an electrode assembly in which the tubing is not provided to extend to the other end portion opposite to one end portion perpendicular to the winding axis of the electrode assembly.

In the tubing, the electrode assembly may be exposed on the entire surface of the other end portion opposite to one end portion perpendicular to the winding axis of the electrode assembly. That is, the tubing may not be provided at the other end portion opposite to one end portion perpendicular to the winding axis of the electrode assembly.

Referring to FIGS. 1(a) and 1(b), the tubing 10 may be provided to extend in order to surround at least a portion of the side surface 2 of the electrode assembly and at least a portion of one end portion 3 perpendicular to the winding axis of the electrode assembly, but is not provided to extend to the other end portion 4 opposite to one end portion 3 perpendicular to the winding axis of the electrode assembly.

The other end portion 4 opposite to the end portion 3 perpendicular to the winding axis of the electrode assembly may be an opposite surface to one end portion 3 perpendicular to the winding axis of the electrode assembly.

As described above, the positive electrode and negative electrode uncoated portions may be located at one end portion 3 perpendicular to the winding axis of the electrode assembly and the other end portion 4, which is an opposite surface to the one end portion, respectively, and the current collector plates may be welded the uncoated portions, whereby the current collection efficiency can be improved. If the tubing 10 is provided to extend to the other end portion 4 opposite to the one end portion 3 perpendicular to the winding axis of the electrode assembly, the negative electrode uncoated portion and negative electrode current collector plate of the electrode assembly 1 may not be electrically connected to the battery can or the resistance may increase, resulting in a decrease in energy density.

In an exemplary embodiment of the present invention, the tubing is provided to extend from an outer peripheral surface of one end portion perpendicular to the winding axis of the electrode assembly to the hole, and an area of the tubing provided at one end portion perpendicular to the winding axis of the electrode assembly is 50% or less relative to 100% of an area of one end portion perpendicular to the winding axis of the electrode assembly.

Referring to FIGS. 1(a) and 1(b), an area 12A of the tubing provided at one end portion perpendicular to the winding axis of the electrode assembly is 45% or less, 40% or less, 35% or less, 30% or less, 25% or less, or 20% or less relative to 100% of the area of one end portion perpendicular to the winding axis of the electrode assembly.

The area 12A of the tubing provided at one end portion perpendicular to the winding axis of the electrode assembly may be 5% or greater, or 10% or greater relative to 100% of the area of one end portion perpendicular to the winding axis of the electrode assembly.

According to an exemplary embodiment, the area of the tubing provided at one end portion perpendicular to the winding axis of the electrode assembly may be within a range in which the area does not affect a subsequent assembly process, and may not be limited to the above range. The area of one end portion perpendicular to the winding axis of the electrode assembly may be a sum of the area 12A of the tubing provided at one end portion perpendicular to the winding axis of the electrode assembly and an area of the hole. The area of the hole may be 50% or greater relative to the area of one end portion perpendicular to the winding axis of the electrode assembly.

The area of the hole provided at one end portion perpendicular to the winding axis of the electrode assembly may be 50% or greater, 55% or greater, 60% or greater, 65% or greater, 70% or greater, 75% or greater, or 80% or greater relative to 100% of the area of one end portion perpendicular to the winding axis of the electrode assembly. The area of the hole provided at one end portion perpendicular to the winding axis of the electrode assembly may be 95% or less, or 90% or less relative to 100% of the area of one end portion perpendicular to the winding axis of the electrode assembly.

According to an exemplary embodiment, the area 12A of the tubing provided at one end portion perpendicular to the winding axis of the electrode assembly may be 5% to 50%, 10% to 50%, 10% to 40%, 10% to 30%, or 10% to 20% relative to 100% of the area of one end portion perpendicular to the winding axis of the electrode assembly.

According to an exemplary embodiment, the area of the hole provided at one end portion perpendicular to the winding axis of the electrode assembly may be 50% to 95%, 50% to 90%, 60% to 90%, 70% to 90%, or 80% to 90% relative to 100% of the area of one end portion perpendicular to the winding axis of the electrode assembly.

When the above range is satisfied, the tubing 10 can insulate a portion where the positive electrode uncoated portion and the positive electrode current collector plate 7 are exposed at one end portion 3 perpendicular to the winding axis of the electrode assembly and thus come into contact with the battery can, and improve process capability.

In an exemplary embodiment of the present invention, the tubing is provided to extend from an outer peripheral surface of one end portion perpendicular to the winding axis of the electrode assembly to the hole, and a width of the tubing provided at one end portion perpendicular to the winding axis of the electrode assembly is 30% or less relative to 100% of a diameter of one end portion perpendicular to the winding axis of the electrode assembly.

Referring to FIGS. 1(a) and 1(b), a width 12W of the tubing provided at one end portion 3 perpendicular to the winding axis of the electrode assembly may be 27% or less, 24% or less, 21% or less, or 18% or less relative to 100% of a diameter of one end portion 3 perpendicular to the winding axis of the electrode assembly. The width 12W of the tubing provided at one end portion 3 perpendicular to the winding axis of the electrode assembly may be 9% or greater, 12% or greater, or 15% or greater relative to 100% of the diameter of one end portion 3 perpendicular to the winding axis of the electrode assembly.

According to an exemplary embodiment, the width of the tubing provided at one end portion perpendicular to the winding axis of the electrode assembly may be within a range in which the width does not affect a subsequent assembly process, and may not be limited to the above range.

When the above range is satisfied, the tubing 10 can insulate a portion where the positive electrode uncoated portion and the positive electrode current collector plate 7 are exposed at one end portion 3 perpendicular to the winding axis of the electrode assembly and thus come into contact with the battery can, and improve process capability.

In an exemplary embodiment of the present invention, there is provided the jelly roll in which the tubing includes a stretchable material.

When the tubing includes a stretchable material, compared to a case where the tubing includes a non-stretchable material, even if the electrode assembly swells to some extent due to repeated charging and discharging in the electrolyte solution, the tubing can be provided to fit its shape.

The case of including the non-stretchable material may mean a case of including a material with little or no stretchability.

According to a further exemplary embodiment of the present invention, there may be provided the jelly roll in which the tubing has insulating, flame retardant, and heat resistant properties. By including the above properties, the tubing does not undergo the problem of wrinkling or lifting compared to the insulating tape, making it possible to improve an insulation quality, to shorten the tact time required to produce one product, and to improve processing capability.

In an exemplary embodiment of the present invention, the tubing includes a polyvinyl chloride-based (PVC+EVE) compound. However, the tubing is not limited thereto as long as it has an insulating property.

Due to the compound, the tubing may have an insulating effect and a swelling effect. In particular, the inclusion of the above compound allows the tubing to shrink at room temperature, unlike PET, which is commonly used for general tube structures. The PET can be shrunk by heat shrinkage at a high temperature of 80°C or higher.

In an exemplary embodiment of the present invention, there is provided the jelly roll in which the tubing shrinks at room temperature.

The room temperature may be a temperature selected from 20°C to 27°C, for example, 22°C to 26°C, 24°C to 26°C, or 25°C.

The shrinkage of the tubing at room temperature allows for improvement in process capacity by shortening the tact time required to produce one product, compared to a tubing that is heat-shrunk at a high temperature of 80°C or higher, and easy reworkability, which is also advantageous for cost savings. That is, since the tubing shrinks at room temperature, a tube heating process, which applies heat to the tubing, can be omitted, and the tubing can be implemented with a simple process, unlike the process of the related art.

The tubing may include a polyvinyl chloride-based (PVC+EVE) compound and shrink at room temperature.

In an exemplary embodiment of the present invention, there is provided the jelly roll in which a rate of shrinkage of the tubing at room temperature is 30% or less.

The rate of shrinkage at room temperature refers to a degree of shrinkage relative to 100% of the tubing at room temperature.

The rate of shrinkage of the tubing at room temperature may be 28% or less, 26% or less, 24% or less, 22% or less, or 20% or less. The rate of shrinkage of the tubing at room temperature may be 3% or greater, 5% or greater, 7% or greater, 9% or greater, or 11% or greater.

When the above range is satisfied, the tubing is shrunk at room temperature, allowing for improvement in process capacity by shortening the tact time required to produce one product, compared to a tubing that is heat-shrunk at a high temperature, and easy reworkability, which is also advantageous for cost savings.

In an exemplary embodiment of the present invention, there is provided the jelly roll in which the tubing includes an insulating material.

The tubing may have an insulation strength of 14 KV/mm and a dielectric constant of 9.0. Here, the insulation strength may be measured in accordance with the KSC2105 test method, and the dielectric constant may be measured in accordance with the AS1977 test method.

In the above range, the tubing is provided to surround the side surface of the electrode assembly and one end portion perpendicular to the winding axis of the electrode assembly where the positive electrode uncoated portion and the positive electrode current collector plate are exposed and may come into contact with the battery can, improving an insulation quality.

Since the tubing provided to surround the side surface of the electrode assembly and one end portion perpendicular to the winding axis of the electrode assembly includes an insulating material, the problem of wrinkling or lifting does not occur compared to a case where the insulating tape is attached, making it possible to improve an insulation quality, to shorten the time required to produce a product, and to improve process capability. In addition, insertion into a battery can is facilitated, and reworkability is easy, which is also advantageous for cost savings.

In an exemplary embodiment of the present invention, there is provided the jelly roll in which the tubing has a thickness of 3 mm or less.

The thickness of the tubing may be 2.5 mm or less, 2 mm or less, 1.5 mm or less, or 1 mm or less. The thickness of the tubing may be 0.04 mm or greater, or 0.05 mm or more.

When the above range is satisfied, it may be advantageous to secure a capacity of the jelly roll including the tubing of the present invention.

An exemplary embodiment of the present invention provides a secondary battery including: the jelly roll according to the exemplary embodiment described above; and a battery can configured to accommodate the jelly roll, wherein the battery can includes an electrode terminal riveted through a through-hole formed in a bottom of the battery can, and a gasket provided between the electrode terminal and an outer diameter portion of the through-hole.

Referring to FIG. 2, a secondary battery 30 is shown having a structure in which both a positive electrode terminal and a negative electrode terminal are electrically connected at a bottom 200 of the battery can on an opposite side to an open portion on one side of a battery can 31.

The secondary battery 30 includes an electrode terminal 100 riveted through a through-hole 300 formed in the bottom 200 and a gasket 400 provided between the electrode terminal and an outer diameter portion of the through-hole 300 in order to insulate the electrode terminal 100 from the battery can 31.

The secondary battery may be a cylindrical secondary battery, in which case a negative electrode terminal is provided on the bottom 200 and the riveted electrode terminal 100 may be a positive electrode terminal.

The positive electrode current collector plate 7 welded to the positive electrode uncoated portion 6 in the electrode assembly 1 can be electrically connected to the electrode terminal 100 riveted through the through-hole 300 formed in the bottom 200 of the battery can, and the exposed positive electrode uncoated portion 6 and the positive electrode current collector plate 7 of the electrode assembly 1 that come into contact with the battery can 31 can be insulated by the tubing 10. This allows for a stable increase in the current applied to the battery, implementation of high energy density, and provision of a high-capacity, high-power secondary battery.

In an exemplary embodiment of the present invention, there is provided the secondary battery in which the electrode terminal includes a body portion inserted into the through-hole; an external flange portion extending from a circumference of one side of the body portion exposed through an outer surface of the bottom along the outer surface; an internal flange portion extending from a circumference of the other side of the body portion exposed through an inner surface of the bottom toward the inner surface; and a flat portion provided inside the internal flange portion.

The battery can according to an exemplary embodiment of the present invention may include an electrode terminal riveted to a bottom of the battery can. As an example, the electrode terminal riveted to the bottom of the battery can may have a riveting structure.

Referring to FIG. 2, the riveting structure of the electrode terminal 100 according to an exemplary embodiment may include the cylindrical battery can 31 with one side open, the electrode terminal 100 riveted through the through-hole 300 formed in the bottom 200 of the battery can, and the gasket 400 provided between the electrode terminal 100 and the outer diameter portion of the through-hole 300.

The battery can 31 is made of a conductive metal material. In one example, the battery can 31 may be made of steel material, but the present invention is not limited thereto.

The electrode terminal 100 is made of a conductive metal material. In one example, the electrode terminal 100 may be made of aluminum, but the present invention is not limited thereto.

The gasket 400 may be made of a polymer resin having insulating and elastic properties. In one example, the gasket 400 may be made of polypropylene, polybutylene terephthalate, polyfluorinated ethylene, or the like, but the present invention is not limited thereto.

Preferably, the electrode terminal 100 may include a body portion 110 inserted into the through-hole 300, an external flange portion 120 extending from a circumference of one side of the body portion 110 exposed through an outer surface of the bottom 200 of the battery can along the outer surface, an internal flange portion 130 extending from a circumference of the other side of the body portion 110 exposed through an inner surface of the bottom 200 of the battery can toward the inner surface, and a flat portion 140 provided inside the internal flange portion 130.

Preferably, the flat portion 140 and the inner surface of the bottom 200 of the battery can may be parallel to each other. Here, 'parallel' means substantially parallel when observed with the naked eyes.

According to an exemplary embodiment of the present invention, the riveting structure of the electrode terminal 100 may be formed using a caulking jig that moves up and down. First, a preform (not shown) of the electrode terminal 100 is inserted into the through-hole 300 formed in the bottom of the battery can with the gasket 400 interposed therebetween. The preform refers to the electrode terminal before riveting.

Next, a caulking jig is inserted into an inner space of the battery can. The caulking jig has a groove and a protrusion corresponding to a final shape of the electrode terminal 100 on a surface facing the preform in order to form the electrode terminal 100 by riveting the preform.

Next, the caulking jig is moved down to press-form an upper portion of the preform, thereby transforming the preform into a riveted electrode terminal 100.

While the preform is pressed by the caulking jig, the portion of the gasket 400 interposed between the outer flange portion 120 and the outer surface of the bottom of the battery can is elastically compressed and decreases in thickness. Accordingly, the sealing performance and airtightness between the riveted electrode terminal 100 and the battery can are significantly improved.

Preferably, the gasket 400 is sufficiently compressed in order to secure the desired sealing strength without being physically damaged during the riveting process of the preform.

In one example, when the gasket 400 is made of polybutylene terephthalate, the gasket 400 preferably has a compression ratio of 50% or greater at a point where it is compressed to its minimum thickness. The compression rate is a ratio of change in thickness before and after compression to a thickness before compression.

In another example, when the gasket 400 is made of polyfluoroethylene, the gasket 400 preferably has a compression ratio of 60% or greater at the point where it is compressed to its minimum thickness.

In still another example, when the gasket 400 is made of polypropylene, the gasket 400 preferably has a compression ratio of 60% or greater at the point where it is compressed to its minimum thickness.

Preferably, the press-forming of the upper portion of the preform may be performed stepwise by moving the caulking jig up and down at least twice. That is, the preform may be deformed several times by press-forming the preform stepwise. In this case, the pressure applied to the caulking jig may be increased stepwise. By doing so, the stress applied to the preform is distributed several times, so that it is possible to prevent the gasket 400 from being damaged during the caulking process.

When the caulking jig is separated from the battery can after the press-forming of the preform using the caulking jig is completed, as shown in FIG. 2, a riveting structure of the electrode terminal 100 according to an exemplary embodiment of the present disclosure may be obtained.

According to the above exemplary embodiment, the caulking jig press-forms the upper portion of the preform through an up and down movement inside the battery can. In some cases, a rotary jig that is used in the related art may be used for press-forming the preform.

However, the rotary jig rotates while tilted at a predetermined angle with respect to a central axis of the battery can. Therefore, a rotary jig with a large rotation radius may interfere with an inner wall of the battery can. In addition, when a depth of the battery can is large, a length of the rotary jig also becomes correspondingly longer. In this case, the press-forming of the preform may not be performed properly as the rotation radius of an end portion of the rotary jig increases. Therefore, the press-forming using a caulking jig is more effective than using a rotary jig.

The riveting structure of the electrode terminal 100 according to an exemplary embodiment of the present invention described above may be applied to a secondary battery 30.

In one example, the secondary battery 30 may include a battery can 31. The battery can 31 may be cylindrical. Dimensions of the battery can may be 30 mm to 55 mm in diameter of a circle at each of both end portions and 60 mm to 120 mm in height. Preferably, the circular diameter x height of the cylindrical battery can 31 may be 46 mm x 60 mm, 46 mm x 80 mm, 46 mm x 90 mm, or 46 mm x 120 mm.

Preferably, the cylindrical secondary battery may be, for example, a cylindrical secondary battery whose form factor ratio (defined as a value obtained by dividing the diameter of the cylindrical secondary battery by height, i.e., a ratio of diameter Φ to height H) is greater than about 0.4.

Here, the form factor refers to a value indicating a diameter and height of a cylindrical secondary battery. A cylindrical secondary battery according to an exemplary embodiment of the present invention may be, for example, a 46110 cell, a 48750 cell, a 48110 cell, a 48800 cell, a 46800 cell, or a 46900 cell. In the numerical value representing the form factor, first two numbers indicate a diameter of a cell, next two numbers indicate a height of the cell, and the last number 0 indicates that a cross section of the cell is circular.

The secondary battery according to an exemplary embodiment of the present invention may be a cylindrical secondary battery having an approximately columnar shape whose diameter is approximately 46 mm, height is approximately 110 mm, and form factor ratio is 0.418.

A secondary battery according to another exemplary embodiment may be a cylindrical secondary battery having a columnar shape whose diameter is approximately 48 mm, height is approximately 75 mm, and form factor ratio is 0.640.

A secondary battery according to still another exemplary embodiment may be a cylindrical secondary battery having a columnar shape whose diameter is approximately 48 mm, height is approximately 110 mm, and form factor ratio is 0.418.

A secondary battery according to yet another exemplary embodiment may be a cylindrical secondary battery having a columnar shape whose diameter is approximately 48 mm, height is approximately 80 mm, and form factor ratio is 0.600.

A secondary battery according to still yet another exemplary embodiment may be a cylindrical secondary battery having a columnar shape whose diameter is approximately 46 mm, height is approximately 80 mm, and form factor ratio is 0.575.

A secondary battery according to still yet another exemplary embodiment may be a cylindrical secondary battery having a columnar shape whose diameter is approximately 46 mm, height is approximately 90 mm, and form factor ratio is 0.511.

In the related art, secondary batteries with a form factor ratio of about 0.4 or less have been used. That is, in the related art, for example, an 18650 cell, a 21700 cell, and the like have been used. For an 18650 cell, a diameter is approximately 18 mm, a height is approximately 65 mm, and a form factor ratio is 0.277. For a 21700 cell, a diameter is approximately 21 mm, a height is approximately 70 mm, and a form factor ratio is 0.300.

According to an exemplary embodiment of the present invention, there is provided the secondary battery in which the secondary battery includes a negative electrode terminal provided on the bottom of the battery can, the riveted electrode terminal is a positive electrode terminal, and the positive electrode terminal is electrically connected to one end portion perpendicular to the winding axis of the electrode assembly.

According to an exemplary embodiment of the present invention, there is provided the secondary battery in which the electrode assembly further includes a positive electrode current collector plate provided at one end portion perpendicular to the winding axis of the electrode assembly, and the positive electrode terminal is electrically connected to the positive electrode current collector plate.

According to an exemplary embodiment of the present invention, there is provided the secondary battery in which the tubing is provided to include a hole formed in a central portion of one end portion perpendicular to the winding axis of the electrode assembly, and the positive electrode terminal and the positive electrode current collector plate are electrically connected to each other through the hole.

The current collector plate and tubing in the secondary battery according to an exemplary embodiment of the present invention are the same as those described above in the electrode assembly.

In the present invention, a positive electrode active material coated on a positive electrode plate and a negative electrode active material coated on a negative electrode plate can be used without limitation as long as they are active materials known in the art.

Non-limiting examples of the positive electrode active material may include usual positive electrode active materials that can be used for a positive electrode of a conventional electrochemical device, and in particular, a lithium manganese oxide, a lithium cobalt oxide, a lithium nickel oxide, a lithium iron oxide, or a lithium composite oxide made by combining them may be used.

In one example, the positive electrode active material may include an alkali metal compound represented by a general formula A[AₓM_{y}]O_{2+z} (A includes at least one element of Li, Na and K; M includes at least one element selected from Ni, Co, Mn, Ca, Mg, Al, Ti, Si, Fe, Mo, V, Zr, Zn, Cu, Al, Mo, Sc, Zr, Ru, and Cr; x≥0, 1≤x+y≤2, - 0.1≤z≤2; x, y and z, and stoichiometric coefficients of components included in M are selected such that a compound remains electrically neutral).

In another example, the positive electrode active material may be an alkali metal compound xLiM¹O₂-(1-x)Li₂M²O₃ (M¹ includes at least one element having an average oxidation state of 3; M²includes at least one element having an average oxidation state of 4; 0≤x≤1) disclosed in US6,677,082, US6,680,143, and the like.

In another example, the positive electrode active material may be a lithium metal phosphate represented by a general formula LiₐM¹ₓFe₁₋ₓM²_{y}P_{1-y}M³_{z}O_{4-z}(M¹ includes at least one element selected from Ti, Si, Mn, Co, Fe, V, Cr, Mo, Ni, Nd, Al, Mg, and Al; M² includes at least one element selected from Ti, Si, Mn, Co, Fe, V, Cr, Mo, Ni, Nd, Al, Mg, Al, As, Sb, Si, Ge, V and S; M³ includes an element in a halogen group optionally including F; 0<a≤2, 0≤x≤1, 0≤y<1, 0≤z<1; a, x, y, z, and stoichiometric coefficients of components included in M¹, M², and M³ are selected such that the compound remains electrically neutral) or Li₃M₂(PO₄)₃ [M includes at least one element selected from Ti, Si, Mn, Fe, Co, V, Cr, Mo, Ni, Al, Mg, and Al].

Preferably, the positive electrode active material may include a primary particle and/or a secondary particle in which the primary particles are aggregated.

Non-limiting examples of the negative electrode active material may include usual negative electrode active materials that can be used for a negative electrode of an electrochemical device in the related art, and particularly, lithium adsorption materials such as a lithium metal or lithium alloy, carbon, petroleum coke, activated carbon, graphite or other carbonaceous materials may be used.

In one example, the negative electrode active material may use a carbon material, a lithium metal or lithium metal compound, silicon or a silicon compound, tin or a tin compound, or the like. A metal oxide such as TiO₂ and SnO₂ with a potential less than 2V may also be used as a negative electrode active material. As the carbon material, both low-crystalline carbon and high-crystalline carbon may be used.

Non-limiting examples of the positive electrode current collector include a foil or the like made of aluminum, nickel, or a combination thereof, and non-limiting examples of the negative electrode current collector include a foil or the like made of copper, gold, nickel, or a copper alloy or a combination thereof.

For the separator, a porous polymer film, for example, a porous polymer film made of a polyolefin-based polymer such as an ethylene homopolymer, a propylene homopolymer, an ethylene/butene copolymer, an ethylene/hexene copolymer or an ethylene/methacrylate copolymer may be used alone, or a structure obtained by laminating the polymers may be used. In another example, for the separator, a typical porous non-woven fabric, for example, a non-woven fabric formed of high melting point glass fibers, polyethylene terephthalate fibers, or the like may be used.

At least one surface of the separator may include a coating layer of inorganic particles.

In addition, it is also possible that the separator itself is made of a coating layer of inorganic particles. Particles constituting the coating layer may have a structure combined with a binder so that an interstitial volume exists between adjacent particles.

The inorganic particles may be made of an inorganic material having a dielectric constant of 5 or greater. Non-limiting examples of the inorganic particles may include at least one material selected from the group consisting of Pb(Zr,Ti)O₃(PZT), Pb₁₋ₓLaₓZr_{1-y}Ti_{y}O₃(PLZT), PB(Mg₃Nb_{2/3})O₃-PbTiO₃(PMN-PT), BaTiO₃, hafnia (HfO₂), SrTiO₃, TiO₂, Al₂O₃, ZrO₂, SnO₂, CeO₂, MgO, CaO, ZnO and Y₂O₃.

The electrolyte may be a salt having a structure such as A⁺B⁻. Here, A⁺ includes ions composed of alkali metal cations such as Li⁺, Na⁺ and K⁺ or combinations thereof. B⁻includes any one or more anions selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The electrolyte can also be used by dissolving it in an organic solvent. As the organic solvent, propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma (γ) butyrolactone, or mixtures thereof may be used.

Still another exemplary embodiment of the present invention provides a battery pack including the at least one secondary battery according to the exemplary embodiment described above.

The cylindrical secondary battery according to the exemplary embodiment described above may be used to manufacture a battery pack.

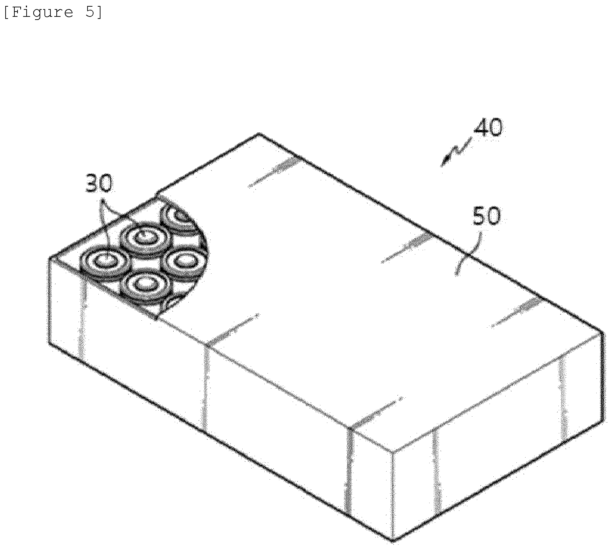

FIG. 5 is a view showing a schematic configuration of a battery pack including secondary batteries according to an exemplary embodiment of the present invention.

Referring to FIG. 5, the battery pack 40 according to an exemplary embodiment of the present invention includes an assembly in which the cylindrical secondary batteries are electrically connected, and a pack housing 50 for accommodating the assembly. The cylindrical secondary battery is the secondary battery 30 according to the exemplary embodiment described above. In the drawing, for convenience of illustration, components such as a bus bar, a cooling unit and an external terminal for electrical connection of the cylindrical secondary batteries 30 are omitted.

Still another exemplary embodiment of the present invention provides a vehicle including the at least one battery pack described above.

The battery pack may be mounted on a vehicle. The vehicle may be, for example, an electric vehicle, a hybrid vehicle, or a plug-in hybrid vehicle. The vehicle includes a four-wheeled vehicle or a two-wheeled vehicle.

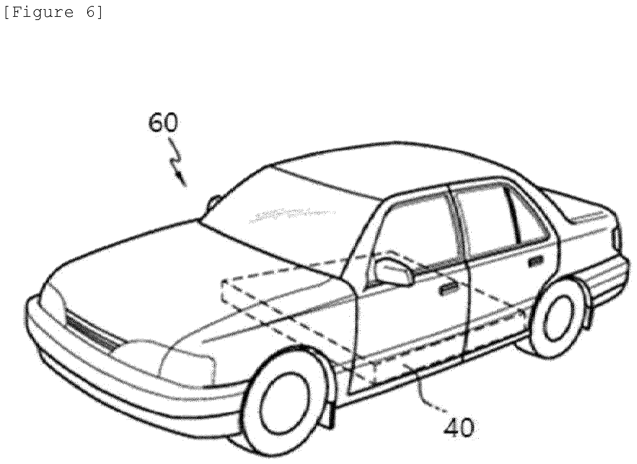

FIG. 6 is a view for illustrating a vehicle including the battery pack of FIG. 5.

Referring to FIG. 6, the vehicle 60 according to an exemplary embodiment of the present invention includes the battery pack 40 according to an exemplary embodiment of the present invention. The vehicle operates by receiving power from the battery pack 40 according to an exemplary embodiment of the present invention.

Although the present invention has been described with reference to the limited exemplary embodiments and drawings, the present invention is not limited thereto, and a variety of modifications and variations can be made within the technical spirit of the present invention and the equivalent range of the claims described below by one skilled in the art to which the present invention belongs.

## Claims

1. A jelly roll comprising:
an electrode assembly having a positive electrode, a separator, and a negative electrode which are stacked and wound, and
a tubing provided to surround at least a part of a side surface of the electrode assembly and at least a part of an end portion perpendicular to a winding axis of the electrode assembly,
wherein the tubing has a hole formed in a central portion of one end portion perpendicular to the winding axis of the electrode assembly.

2. The jelly roll of claim **1,** wherein at least one of the positive electrode and the negative electrode comprises a current collector and an electrode active material layer provided on the current collector, and the current collector comprises an uncoated portion not provided with the electrode active material layer,
wherein at least a portion of the uncoated portion is exposed on the side surface of the electrode assembly, and
wherein the tubing surrounds the uncoated portion on the side surface of the electrode assembly.

3. The jelly roll of claim 1, further comprising a current collector plate provided at at least one end portion perpendicular to the winding axis of the electrode assembly, and
wherein the current collector plate is located between the tubing and the electrode assembly, or is located at the other end portion perpendicular to the winding axis of the electrode assembly.

4. The jelly roll of claim 1, wherein the tubing does not extend to the other end portion opposite to one end portion perpendicular to the winding axis of the electrode assembly.

5. The jelly roll of claim 1, wherein the tubing extends from an outer peripheral surface of one end portion perpendicular to the winding axis of the electrode assembly to the hole, and
wherein an area of the tubing provided at one end portion perpendicular to the winding axis of the electrode assembly is 50% or less relative to 100% of an area of one end portion perpendicular to the winding axis of the electrode assembly.

6. The jelly roll of claim 1, wherein the tubing extends from an outer peripheral surface of one end portion perpendicular to the winding axis of the electrode assembly to the hole, and
wherein a width of the tubing structure provided at one end portion perpendicular to the winding axis of the electrode assembly is 30% or less relative to 100% of a diameter of one end portion perpendicular to the winding axis of the electrode assembly.

7. The jelly roll of claim 1, wherein the tubing comprises a stretchable material.

8. The jelly roll of claim 1, wherein the tubing comprises a polyvinyl chloride-based (PVC+EVE) compound.

9. The jelly roll of claim 1, wherein the tubing is made of a material that shrinks at room temperature.

10. The jelly roll of claim 1, wherein a shrinkage of the tubing at room temperature is 30% or less.

11. The jelly roll of claim 1, wherein the tubing comprises an insulating material.

12. The jelly roll of claim 1, wherein the tubing has a thickness of 3 mm or less.

13. A secondary battery comprising:
the jelly roll of any one of claims 1 to 12; and
a battery can configured to accommodate the jelly roll,
wherein the battery can comprises an electrode terminal riveted through a through-hole formed in a bottom of the battery can, and a gasket provided between the electrode terminal and an edge of the through-hole.

14. The secondary battery of claim 13, wherein the electrode terminal comprises:
a body portion inserted into the through-hole;
an external flange portion extending from a circumference of one side of the body portion exposed through an outer surface of the bottom;
an internal flange portion extending from a circumference of the other side of the body portion exposed through an inner surface of the bottom; and
a flat portion provided inside the internal flange portion.

15. The secondary battery of claim 13, wherein the secondary battery comprises a negative electrode terminal provided on the bottom of the battery can, and the riveted electrode terminal is a positive electrode terminal, and
wherein the positive electrode terminal is electrically connected to one end portion perpendicular to the winding axis of the electrode assembly.

16. The secondary battery of claim 15, wherein the electrode assembly further comprises a positive electrode current collector plate provided at one end portion perpendicular to the winding axis of the electrode assembly, and
wherein the positive electrode terminal is electrically connected to the positive electrode current collector plate.

17. The secondary battery of claim 16, wherein the positive electrode terminal and the positive electrode current collector plate are electrically connected to each other through the hole of the tubing.

18. A battery pack comprising at least one secondary battery of claim 13.

19. A vehicle comprising at least one battery pack of claim 18.
